Europäisches Patentamt

(19) European Patent Office

Office européen des brevets

(11) Publication number : **0 646 325 A1**

(12) **EUROPEAN PATENT APPLICATION**

(21) Application number : 94306031.9

(22) Date of filing : 16.08.94

(51) Int. Cl.[6] : **A23L 1/18**, A23K 1/18, A23K 1/16

(30) Priority : 24.08.93 JP 209365/93

(43) Date of publication of application :
05.04.95 Bulletin 95/14

(84) Designated Contracting States :
**DE FR GB**

(71) Applicant : **MATSUTANI CHEMICAL INDUSTRIES CO. LTD.**
3-Banchi, 5-chome, Kita Itami
Itami-shi, Hyogo-ken (JP)

(72) Inventor : **Katta, Yasuo**
925-1, Kuniyasu,
Inami-cho
Kako-gun, Hyogo-ken (JP)
Inventor : **Wakabayashi, Shigeru**
2021-1, Akurakita 2-chome
Takarazuka-shi, Hyogo-ken (JP)

(74) Representative : **Goodwin, Mark et al**
Wilson, Gunn, M'Caw & Co.,
41-51 Royal Exchange,
Cross Street
Manchester M2 7BD (GB)

(54) **Pet food exhibiting effect of preventing obesity.**

(57)   A pet food having an obesity-preventive effect comprises 5 to 100 parts by weight of an indigestible dextrin containing at least 30% by weight of indigestible components, per 100 parts by weight of carbohydrate present in the pet food. The pet food permits the control of the blood-sugar level and the amount of insulin secreted in a pet animal in response to the oral ingestion of sugary substances without any reduction in the pet's taste to thus prevent and treat obesity of pets and deficiency in the glucose tolerance.

EP 0 646 325 A1

SPECIFICATION

BACKGROUND OF THE INVENTION

The present invention relates to a pet food exhibiting an effect of preventing obesity.

Recently, owners and keepers of pets such as dogs, cats, hamsters, rats, rabbits, monkeys and small-sized pigs have increasingly recognized these pets as members of their family and the health and longevity of these pets have become matters of great concern. In advanced countries, i.e., Europe and America including Japan, the eating habits of pets have been improved as the human diet has been enriched. As a result, the population of pets suffering from geriatric diseases represented by obesity and diabetes increases steadily because of supernutrition and unbalanced diet as well as lack of exercise. Under such social background, there has been investigated the development of a healthy pet food, in particular, having low contents of fats and oils and a low calorie for maintaining the health of pets and for improving the health thereof and a variety of formulated foods have already been on the market, but these pet foods have still sufferred from, for instance, problems of pets' taste.

In respect of man, there has also been developed various agents for inhibiting an increase in the blood-sugar level and excess insulin-secretion for preventing normal person from suffering from obesity and/or diabetes. As such agents, there have been known, for instance, Acarbose (available from Bayer Yakuhin, Ltd.) and AO-128 (available from Takeda Chemical Industries, Ltd.) which are substances each having an effect of inhibiting the gastrointestinal absorption of sugar and starch and inhibitors for enzymes involved in digestion. However, both of them are medicines for treating human beings and it is difficult and dangerous for the consuming public to use them for the preventive purpose because of problems of safety such as those concerning side-effects. Moreover, polymers of glucose moieties repeatedly bonded through $\alpha$-1,6 bonds such as isomaltotriose, dextran and pullulan have been known to have an effect of inhibiting an increase in the blood-sugar level in response to ingestion of sugar. It has also been known that isomaltotriose and dextran as such are absorbed and, in particular, dextran suffers from a problem of safety since it is proved that dextran exhibits side-effects such as an effect of elongating the blood-coagulation time. On the other hand, pullulan can inhibit any increase in the blood-sugar level after the ingestion of sugar, but is substantially ineffective for the control of the blood-sugar level after the ingestion of glucose and maltose. Furthermore, the effect thereof for controlling the insulin-secretion has not yet been proved. Moreover, if pullulan is administered to a young animal, it has been known that pullulan controls any increase in the body weight of the animal and inhibits the growth thereof.

On the other hand, the effect of insulin is very important for controlling the sugar-metabolism in pets suffering from diabetes, pets whose probability of suffering from diabetes is high or pets suffering from obesity and, therefore, it has been needed for those pets to protect, hold and/or enhance the effect of insulin. There have been used, for instance, solutions for transfusion and foods containing monosaccharides or sugar alcohols thereof such as fructose, sorbitol and xylitol; disaccharides or sugar alcohols thereof such as maltose, leucrose and maltitol; and glucose polymers (U.S. Patent No. 3,928,135) capable of being digested in and absorbed by living bodies independent of the effect of insulin, for the prevention of temporal hyperglycemia after the ingestion of these sugars, for saving the insulin-secretion, for the supplementation of energy or for controlling the osmotic pressures of the transfusion solutions. However, these mono- and di-saccharides have high degree of sweetness and the quality of sweetness thereof is inferior to that of sugar. In addition, these sugar alcohols often become a cause of diarrhea. Moreover, it has been known that the glucose polymer never stimulates any insulin-secretion when it is used in the form of a transfusion solution, but the transfusion is a medical act and cannot be commonly adopted.

SUMMARY OF THE INVENTION

An object of the present invention is to provide a pet food which can control the blood-sugar level and the amount of insulin secreted in response to the oral ingestion of sugary substances without any reduction in taste to thus prevent and treat obesity of pets.

According to the present invention, the foregoing object can be accomplished by providing a pet food having an obesity-preventive effect which comprises 5 to 100 parts by weight of an indigestible dextrin containing at least 30% by weight of an indigestible component, per 100 parts by weight of carbohydrate present in the pet food. More specifically, the pet food of the present invention is characterized in that an indigestible dextrin having an effect as a blood-sugar level- and insulin-secretion-inhibitory agent is added to a pet food mainly comprising carbohydrate.

The inventors of this invention have found out that indigestible dextrin exhibits an effect of controlling the intestinal function, an effect of improving serum lipids and an effect of inhibiting insulin-secretion in response to glucose-stimulation and that the indigestible dextrin does not have any adverse effect on the increase in the blood-sugar level in response to glucose-stimulation. The inventors of this invention have intensively investigated the influence of the indigestible dextrin on the ingested carbohydrate included in pet foods in a large amount, have found out that the indigestible dextrin is excellent in the effect of inhibiting any increase in the blood-sugar level in consequence of carbohydrate ingestion and thus have completed the present invention.

In the present invention, the inventors have elucidated that the effect of the indigestible dextrin relies on the inhibition of the absorption of glucose formed through digestion (or hydrolysis) of carbohydrate as well as inhibition of gastrointestinal secretion of glucagon which has an effect of stimulating insulin-secretion and accordingly the insulin-secretion is inhibited. In addition, the indigestible dextrin does not suffer from the problem of toxicity as is proved by acute toxicity, subacute toxicity and mutagenicity tests and the human beings have widely ingested it as a safe food over a long time period. Besides, the physico-chemical properties thereof are stable to any pH change and heat, does not react with other ingredients for foods and, therefore, can satisfactorily withstand cooking processes and various steps for food processing. The present invention utilizes such indigestible dextrin exhibiting the foregoing characteristic properties for the purpose of preventing and treating the obesity of pets.

Moreover, the inventors have conducted intensive studies, have found out that the indigestible dextrin is excellent in taste and texture and permits the relaxation of the increase in the blood-sugar level as will be discussed in detail below and that the taste and texture of pet foods peculiar thereto is rarely impaired through the use of this indigestible dextrin as an ingredient for pet foods and thus have completed the present invention.

## BRIEF EXPLANATION OF THE DRAWINGS

Fig. 1 is a graph showing the change in the blood-sugar level with time observed in the glucose tolerance test carried out in Example 3;

Fig. 2 is a graph showing the change in the insulin concentration with time observed in the glucose tolerance test carried out in Example 3; and

Fig. 3 is a graph showing the fructosamine concentration present in the rat plasma during fasting or starvation, observed in Example 3 after breeding the rat for 4 weeks.

## DESCRIPTION OF THE PREFERRED EMBODIMENTS

The term "indigestible dextrin" used herein means the dextrin which is prepared by heating starch in the presence of a mineral acid to give pyrodextrin, treating the resulting pyrodextrin with $\alpha$-amylase and optionally subjecting it to a glucoamylase treatment, an ion exchange resin-chromatography treatment and/or a refining treatment and which comprises an indigestible component in an amount of not less than 30% by weight, as determined by the method defined below.

The indigestible dextrin prepared by either of the following methods can effectively be used in the present invention:

(1) A small amount of an inorganic acid, preferably hydrochloric acid is added to starch in the powdery state, the mixture is heated to give pyrodextrin, then the dextrin is hydrolyzed with $\alpha$-amylase and optionally refined to give indigestible dextrin having a content of an indigestible component ranging from about 30 to 60% by weight.

(2) The product prepared by the process (1) is further hydrolyzed with glucoamylase and optionally refined to give indigestible dextrin having a content of indigestible components ranging from about 30 to 60% by weight.

(3) The product prepared by the process (2) is further subjected to ion exchange chromatography to separate and remove the glucose fraction from the product and to thus give indigestible dextrin having a content of indigestible components ranging from about 60 to 90% by weight.

The starch as a starting material for preparing the indigestible dextrin used in the invention is not restricted to specific ones, but may be starch derived from, for instance, corn, waxy corn, potato, sweet potato, tapioca, wheat, barley and rice.

The foregoing methods each will hereunder be described in more detail.

(1) A mineral acid (such as hydrochloric acid, nitric acid, sulfuric acid), preferably hydrochloric acid is added to starch in an amount ranging from 3 to 10% by weight (as expressed in terms of the weight of a 1% by weight aqueous solution of the acid) and the mixture is heat-treated to give pyrodextrin. It is preferred to uniformly admix the starch and the mineral acid aqueous solution with one another, prior to the heat-treatment, by stirring the mixture in an appropriate mixer and then aging it and to then reduce the moisture content in the mixture to about 5% by weight through drying of the mixture, in advance, by heating it to a temperature preferably ranging from about 100 to 120 °C. The conditions for the heat-treatment differ from those for the heat-treatment of the conventional dextrin heated in the presence of acids (white dextrin and yellow dextrin) and thus the heat-treatment is desirably carried out at a temperature ranging from 150 to 200 °C, for 10 to 120 minutes, preferably 30 to 120 minutes. In this respect, the higher the temperature during the heat-treatment, the higher the content of indigestible components in the resulting product and therefore, the temperature more preferably ranges from 150 to 180°C.

Alternatively, it is also possible to carry out the reaction at an elevated temperature for a short period of time by properly selecting a heating apparatus to be used. For instance, the mixture can more efficiently be heat-treated in an apparatus such as an extruder which permits a uniform reaction of the mixture within a very short time. In case of large-scale production, the conditions for heat-treatment must sometimes be changed since the treatment is a reaction of a powdery mixture. In this case, it is desirable to appropriately modify the heating conditions while intermittently monitoring the quality of the mixture during the heat-treatment.

The extruder herein means a kind of pressure-extruder and are roughly divided into two groups, i.e., the single-screw type one in which a roratable screw is inserted into a cylinder and the twin-screw type one in which two screws capable of rotating opposite directions or the same directions are inserted into a cylinder having an 8-shaped cross section. Both of them can be used in the present invention, with the twin-screw type extruder being particularly preferred. In either of these extruders, the screw is, in general, removable and the screw may have any structure such as those having various kinds of pitches including inverse pitches which may appropriately be combined and selected depending on the properties of raw materials to be treated. The extruder is an apparatus usually used in such a manner that the cylinder is heated, a raw material is, at the same time, fed thereto through an end of the rotating screw to thus treat the raw material under the pressed and heated condition, while making use of the heat generated through the friction between the screw and the raw material.

In respect of the size of the extruder (independent of the kinds thereof), the screw generally has a diameter ranging from 30 to 340 mm and a ratio of the length to the diameter thereof ranging from about 10:1 to 45:1. The means for heating may be any system such as steam heating, electric heating and induction heating. Preferably, the discharge pressure at the outlet of the extruder is 0 kg/cm$^2$. Moreover, it is necessary in the practical operation to use other devices and equipments such as a container for raw materials, a raw material-feeder, a cooler for the resulting product, a product-transport device and a container for the product.

In both single- and twin-screw extruders, the raw material is heated at a temperature ranging from about 120 to 200 °C and at a number of revolutions ranging from 120 to 400 rpm. However, the quality of the resulting product should be investigated to determine the optimum processing conditions, because of changes in the moving conditions or movability of the raw materials in the extruder due to the presence of moisture and/or depending on the composition of the raw materials.

The pyrodextrin is dissolved in water in a concentration ranging from about 20 to 45% by weight, followed by adjusting the pH of the pyrodextrin aqueous solution to a level of 5.5 to 6.5 and addition of α-amylase, for instance, Termamyl 60L (trade name of the product available from Novo Nordisk Bioindustries, Ltd.) in an amount ranging from 0.05 to 0.2% by weight based on the weight of the pyrodextrin. Other α-amylase products may likewise be used in amounts (each corresponding to the same activity) selected depending on the activity of each enzymatic agent. After the addition of α-amylase, the solution is heated at the working temperature of α-amylase, i.e., 85 to 100 °C, which varies depending on the kinds thereof) for 30 minutes to 2 hours to thus hydrolyze the dextrin. Then the solution is heated at about 120°C (the deactivation temperature of α-amylase) to stop the action of α-amylase. Alternatively, an acid such as hydrochloric acid or oxalic acid may be added in an amount sufficient to reduce the pH level of the solution to about 4 at which α-amylase causes deactivation. After the hydrolysis of the dextrin with α-amylase, the hydrolyzed solution may be subjected to a steaming treatment under pressure at 115 to 135 °C and then again treated with α-amylase to thus improve the filtration rate of the solution during the refining.

If the solution is purified after the treatment with α-amylase, activated charcoal is added to the solution to remove or eliminate impurities and undesired color. Then the solution is filtered through, for instance, the usual filter press or precoat filter. Thereafter, the solution is treated with ion exchange resins to remove salts and/or colored substances present therein. The treatment with ion exchange resins is preferably carried out by passing the solution through, in order, a cation exchange resin, an anion exchange resin and a mixture of cation and anion exchange resins.

In the method (2), the solution obtained after the treatment with α-amylase in the foregoing process (1) is subjected to a treatment with glucoamylase. In general, the glucoamylase preparations commonly used comprise a small amount of α-amylase. For this reason, the indigestible dextrin may directly be treated with such a glucoamylase preparation to achieve approximately the same hydrolysis effect as that achieved through the treatment with α-amylase and then with glucoamylase, but if the content of α-amylase in the glucoamylase preparation is low, the hydrolysis effect accomplished by such a direct treatment of the dextrin with the glucoamylase preparation is slightly inferior to that achieved by the foregoing process (1), i.e., the treatment with α-amylase. Therefore, it is most preferred to treat the dextrin with α-amylase and then with glucoamylase.

This treatment with glucoamylase can be carried out under the conditions commonly used in the glucoamylase treatment. For instance, the temperature of the solution is reduced to a level on the order of 55 to 60°C, the pH thereof is adjusted to about 4.0 to 6.0, a commercially available glucoamylase preparation is then added to the solution in an amount ranging from 0.05 to 0.2% by weight on the basis of the amount of the original pyrodextrin and the solution is maintained at the foregoing temperature for about 24 to 48 hours for the hydrolysis of the dextrin. The digestible components such as oligosaccharides present in the solution are decomposed into glucose through the foregoing reaction. The amount of glucoamylase to be added to the solution and the treating (or reaction) time are not restricted to those defined above and the amount may be adjusted depending on the activity of the amylase preparation used. In addition, the reaction time may freely be adjusted by controlling the amount of the amylase preparation used. Subsequently, the hydrolysis is completed by deactivation of the glucoamylase through heating the solution to about 80 °C. Then the reaction product is, if necessary, refined in the same manner used in the foregoing method (1). The indigestible dextrin prepared by this preparation method comprises about 50% by weight of glucose in addition to the indigestible components.

In the foregoing method (3), the product obtained after the glucoamylase treatment according to the foregoing method (2) is refined by decolorization, filtration and a treatment with ion exchange resins. Then the product thus refined is treated by chromatography with an ion exchange resin to remove the glucose fraction thereof and to thus increase the content of the indigestible components. In this case, any commercially available strongly acidic cation exchange resins can widely be used as the ion exchange resins for the separation. Preferably used are, for instance, Amberlite IR-116, Amberlite IR-118, Amberlite IR120-B, Amberlite XT-1022E and Amberlite XT-471F (trade names; all of these are available from Organo Company); Diaion 2K-1B, Diaion SKK-102, Diaion SK-104, Diaion SK-106, Diaion SK-110, Diaion SK-112, Diaion SK-116 and Diaion FR-01 (trade names; all of these are available from Mitsubishi Chemical Industries, Ltd.); and XFS-43281.00, XFS-43280.00, XFS-43279.00 and XFS-43278.00 (trade names; all of these are available from Dow Chemical Japan Co.).

In general, these resins are preferably converted into alkali metal- or alkaline earth metal-forms prior to practical use. The flow rate of the solution passed through the column packed with the resin is preferably controlled depending on the kinds of resins used in order to improve the separation efficiency of the high molecular weight indigestible component fraction from glucose fraction and in general the value SV (space velocity) ranges from 0.1 to 0.6 and preferably 0.2 to 0.4. If the value of SV is not within the range defined above, the operating efficiency and the separation efficiency are sometimes impaired. The temperature during passing the solution through the column ranges from 20 to 70°C and preferably 50 to 70°C. This is because if the temperature is lower than the lower limit, the separation efficiency is lowered and the viscosity of the solution increases. The resin is often damaged due to such an increase in the viscosity, while if the temperature exceeds the upper limit, the solution causes browning and other properties thereof may sometimes be impaired.

The content of the indigestible components in the indigestible dextrin can be increased to not less than about 60% by weight, preferably not less than about 80% by weight, while the content of glucose can be reduced to a level on the order of about 0.5% by weight through this separation treatment, but the latter can arbitrarily be controlled by properly adjusting the conditions for the separation. Thus, if it is intended to use glucose as an ingredient for pet foods in addition to the indigestible dextrin, a preparation having a higher glucose content can also be prepared. For instance, if the product obtained after the glucoamylase treatment has a glucose content of 50% by weight, a half thereof (i.e., 25% by weight) can be removed to give a product having an overall glucose content of about 33% by weight. However, it should be noted that the use of a product having an excessively high glucose content results in the formation of a pet food having high hygroscopicity and hence poor shelf life or stability.

In the present invention, the indigestible components present in the indigestible dextrin show the effect of preventing obesity. The indigestible dextrin having a content of the indigestible components of not less than 30% by weight is effectively used in the present invention. In this respect, the higher the content of the indigestible components, the lower the indigestible dextrin-intake required. Therefore, the content of the indigestible components of the indigestible dextrin used in the present invention is preferably not less than 40% by weight, more preferably not less than 50% by weight and may be even 100% by weight.

The pet foods are roughly divided into 4 kinds, i.e., dry type, semi-moist type, canned type and sausage type ones. The indigestible dextrin of the present invention can be incorporated into any type of pet foods and the amount thereof to be incorporated is not restricted to a specific range so far as the addition thereof never impairs the quality of pet foods, but practically ranges from 5 to 100 parts by weight and preferably 5 to 90 parts by weight per 100 parts by weight of the carbohydrate included in each specific pet food. Since any marked effect is not expected even if the amount of the dextrin is excessively increased and therefore, the amount thereof preferably ranges from 10 to 40 parts by weight from the economical standpoint. However, there is a difference in the magnitude of the effect of the dextrin on the physiological functions among individuals. Therefore, the optimum amount thereof is most preferably adjusted while taking the practical effect thereof on individuals into consideration. Moreover, the indigestible dextrin added to a pet food also shows effects of improving the quality of the pet food such as an effect of a binder and an effect of a softening agent.

The term "relaxation of increase in the blood-sugar level" herein used means the fact that, in the glucose tolerance test, the blood-sugar level observed at each instance of the measurement reaches a significantly low value within a relatively short time period (up to about 60 minutes) after the ingestion of each corresponding dextrin as compared with the results observed for other sugars. For instance, in an experiment using rats, the blood-sugar levels observed at 30 and 60 minutes after the oral administration of sugar were 165 and 135 mg/dl respectively, while those observed at 30 and 60 minutes after the oral administration of the indigestible dextrin in addition to sugar were 133 and 113 mg/dl respectively. This clearly indicates that the administration of the indigestible dextrin results in a significantly low blood-sugar level ($p < 0.05$).

The group (A) of blood-sugar levels observed on the rats to which sugar is administered and the group (B) of blood-sugar levels observed on the rats to which the indigestible dextrin is administered in addition to sugar show so-called t distributions which are slightly heavy tailed ones as compared with the normal distribution. If only not more than 5% of the distribution curves representing the blood-sugar levels of these two groups overlap, the risk rate (p) is defined to be < 0.05 (5%) and it can be concluded that there is a significant difference between these groups in a risk rate (p) of < 0.05 (5%). The probability of 5% seems to be very low from the viewpoint of statistics and, therefore, the foregoing result clearly indicates that the indigestible dextrin slowly increases the blood-sugar level when compared with sugar.

In the acute toxicity test wherein the indigestible dextrin was orally administered to rats, the mortality was found to be zero. The $LD_{50}$ of the indigestible dextrin can be estimated to be not less than the highest dose used in this test, i.e., not less than 40 g/Kg (body weight) which is not less than 1.55 time that of D-glucose [25.8 g/Kg (body weight)]. In addition, the indigestible dextrin showed negative response to the mutagenicity test.

As has been discussed above in detail, the indigestible dextrin and the pet foods containing the same according to the present invention have very high safety and it is believed that they do not have any upper limit in the amount of ingestion per day like D-glucose. Moreover, the amount thereof to be ingested through the oral route is naturally restricted by various factors such as easiness of handling and taste and texture of each particular product, but the optimum results can be achieved through the use of the indigestible dextrin preparations of the present invention, in particular, those each having a high content of the indigestible components and prepared through enzyme hydrolysis, since high molecular weight saccharides are sufficiently decomposed. They are, accordingly, free of pasty taste and texture and they have low viscosities approximately identical to that of sugar. Moreover, the degree of sweetness of the indigestible dextrin having a high content of the indigestible components is low because of the low content of low molecular weight saccharides. Thus, the indigestible dextrin of the present invention can be ingested in a large amount per meal or per day.

The present invention will hereunder be described in more detail with reference to the following non-limitative working Examples and the safety and functions of the indigestible dextrin of the invention will also be discussed in detail with reference to Comparative Examples.

In the following Examples, Experiments and Comparative Examples, the content of the indigestible components in the indigestible dextrin was determined by the method detailed below and disclosed in "Quantitative Analysis of Indigestible Components" (DENPUN KAGAKU (Starch Science), 1990, Vol. 37, No. 2, p. 107) which was slightly modified.

Quantitative Analysis of Indigestible Components

The modified method comprises accurately weighing 1g of the indigestible dextrin sample and adding 50 ml of a 0.05 M phosphate buffer (pH 6.0) and then 0.1 ml of $\alpha$-amylase (Termamyl 120L, activity: 120 KNU/g; available from Novo Nordisk Bioindustries, Ltd.) to the sample to react them at 95°C for 30 minutes. After cooling the reaction system, the pH thereof is adjusted to 4.5, then 0.1 ml of amyloglucosidase (No. A-3042, activity: 6100 Unit/ml; available from Sigma Company) is added to the reaction system, the reaction is continued at 60°C for 30 minutes and the system is heated to 90 °C to terminate the reaction. After completion of the reaction, the reaction solution is filled up to 100 ml with water and subjected to the determination of the content of glucose (B (g)) present therein by the pyranose oxidase method and the sample prior to the reaction is likewise determined for the glucose content (A (g)). Thus, the content of the indigestible components (%) is calculated according to the following equation:

$$\text{Content of Indigestible Components (\%)} = [1 - A - (B - A) \times 0.9] \times 100$$

wherein A represents the amount (g) of glucose present in the sample observed prior to the reaction and B represents the amount (g) of glucose present in the sample observed after the reaction.

Experiment 1

The following experiment was carried out using PINEFIBER C (trade name of a powdery indigestible dextrin preparation having a content of the indigestible components of 86.7% by weight, prepared from potato starch by the foregoing method (3), available from Matsutani Chemical Industries, Ltd.).

In this test, 45 rats were used. These rats exhibited, on the average, a blood-sugar level and an amount of secreted insulin of 80.0 mg/dl and 10.5 μ U/ml respectively as determined during fasting or starvation. When sugar was orally administered to these rats in a dose of 1.5 g/Kg (body weight), these animals exhibited increases in the blood-sugar level and the amount of secreted insulin which reached, 30 minutes after the administration, the maxima, i.e., 165 mg/dl and 50.2 μ U/ml, on the average, respectively and 120 minutes after the administration, they were reduced to the normal levels.

Separately, the foregoing indigestible dextrin was added to 1.5 g of sugar in various amounts ranging from 0.075 to 1.50 g (5 to 100 parts by weight per 100 parts by weight of sugar which corresponded to 4.3 to 86.7 parts by weight of the indigestible components), then each mixture was administered to rats through oral route and the cumulative blood-sugar level and the cumulative amount of secreted insulin over 120 minutes after the administration were determined and the data thus obtained were compared with those observed when only sugar was administered in order to estimate relative amounts or levels while assuming the level and amount observed when sugar was administered alone to be 100 respectively. The results thus obtained are summarized in the following Table 1. These data of the blood-sugar level and the amount of secreted insulin were collectively evaluated to determine the relative inhibitory effect of each particular sample and the results thus obtained were also listed in Table 1 in terms of symbols (+) and (-).

## Table 1

| | 0 | 0.075 | 0.15 | 0.60 | 1.50 |
|---|---|---|---|---|---|
| Amount of Indigestible Dextrin Added  (g) | 0 | 0.075 | 0.15 | 0.60 | 1.50 |
| Content of Indigestible Components (g) | 0 | 0.065 | 0.13 | 0.52 | 1.30 |
| Rate of Added Indigestible Components | 0 | 4.3 | 8.7 | 35 | 87 |
| Blood-Sugar Level (%) | 100 | 89.5 | 66.6 | 71.5 | 81.6 |
| Secreted Insulin (%) | 100 | 55.1 | 38.9 | 55.5 | 52.8 |
| Inhibitory Effect | − | + | +++ | ++ | ++ |

-: not effecttive; +: effective; ++: highly effective;

+++: extremely effective.

The data listed in Table 1 clearly indicate that the addition of the indigestible dextrin significantly inhibited increases in the blood-sugar level and the amount of secreted insulin due to the ingestion of sugar. The inhibitory effect of the indigestible dextrin was significant when it was added in an amount of 5 to 100 parts by weight (corresponding to 4.3 to 87 parts by weight of the indigestible components) per 100 parts by weight of sugar, but the effect achieved through addition of 100 parts by weight of the indigestible dextrin was not markedly improved as compared with the effect observed when it was added in an amount of 40 parts by weight. Therefore, the amount of the indigestible dextrin more preferably ranges from 10 to 40 parts by weight (corresponding to 8.7 to 35 parts by weight of the indigestible components).

Moreover, a commercially available edible white dextrin was likewise added to sugar in an amount of 0.15 g per 1.5 g of sugar and the resulting mixture was orally administered to rats in the same manner used above and 30 minutes after the administration, the blood-sugar level was determined. As a result, it was found to be 160 mg/dl on the average, which was approximately identical to that observed when sugar was administered alone through oral route.

Experiment 2

The following experiment was performed using a powdery indigestible dextrin prepared from corn starch by the foregoing method (1) and having a content of the indigestible components of 45.7% by weight.

In this test, 45 rats were used. These rats exhibited, on the average, a blood-sugar level and an amount of secreted insulin of 82.2 mg/dl and 12.4 μ U/ml respectively as determined during fasting or starvation. When sugar was orally administered to these rats in a dose of 1.5 g/Kg (body weight), these animals exhibited increases in the blood-sugar level and the amount of secreted insulin which reached, 30 minutes after the administration, their maxima, i.e., 166 mg/dl and 55.1 μ U/ml, on the average, respectively and 120 minutes after the administration, they were returned back to the normal levels. Separately, the indigestible dextrin (Example) or maltodextrin of DE 12 (Comparative Example) was added to sugar in an amount of 10 parts by weight per 100 parts by weight of sugar and the resulting mixture was administered to rats through oral route. As a result, the blood-sugar level and the amount of secreted insulin as determined 30 minutes after the administation were found to be 135 mg/dl and 32.1 μ U/ml, on the average, for the indigestible dextrin; and 184 mg/dl and 60.2 μ U/ml, on the average, for the maltodextrin, respectively. This indicates that the indigestible dextrin significantly inhibits the increase in the blood-sugar level and the insulin secretion due to sugar ingestion.

Experiment 3

Rats (36 animals in all; averaged body weight 126 g; averaged fat content 20 g; averaged body/fat ratio [(amount of fats/body weight) × 100] 15.8%) were divided into 4 groups. The rats of Group 1 were supplied with a feed having a high sugar content (65% by weight) and the rats of each Group 2 to 4 were supplied with a synthetic feed which comprised 95 parts by weight of the feed having a high sugar content and 5 parts by weight of the indigestible dextrin of Experiment 1, pectin (isolated from lemons, available from Wako Pure Chemical Industries, Ltd.) or Cornfiber (available from Nihon Shokuhin Kako Co., Ltd.) for 4 weeks to breed the animals. These animals could freely take the feed and drinking water (tap water) during the breeding. The ratio of the indigestible components to sugar in the feed comprising the foregoing high sugar content-feed and the indigestible dextrin was about 100:7. After 4 weeks, the body weight, the fat content and the body/fat ratio of each animal were determined and it was found that there was no difference in the feed efficiency (increment in body weight/amount of feed intake) between these 4 Groups. The results thus obtained are listed in the following Table 2.

Table 2

| | No. of Animals | Body Wt. (g) | Fat Content (g) | Body/Fat Ratio(%) |
|---|---|---|---|---|
| Rat (Group 1)[1] | 12 | 407 | 112 | 27.6 |
| Rat (Group 2)[2] | 8 | 408 | 68 | 16.6 |
| Rat (Group 3)[3] | 8 | 441 | 117 | 26.5 |
| Rat (Group 4)[4] | 8 | 416 | 113 | 27.3 |

8

1) Rats of Group 1 were supplied with a feed having a high sugar content.

2) Rats of Group 2 were supplied with a synthetic feed which comprised the aforementioned high sugar content-feed and the indigestible dextrin.

3) Rats of Group 3 were supplied with a synthetic feed comprising the foregoing high sugar content-feed and pectin.

4) Rats of Group 4 were supplied with a synthetic feed comprising the feed high sugar content and Cornfiber.

As seen from the results listed in the foregoing Table 2, the inhibitory effect of pectin and Cornfiber were not obvious, while the indigestible dextrin did not affect the body weights (or growth) of the rats of Group 2 as compared with the rats of Group 1 to which the foregoing high sugar content feed was fed, but resulted in distinct decreases in the fat content and the body/fat ratio. These results clearly indicate that the indigestible dextrin of the present invention is substantially effective for the prevention of obesity.

Experiment 4

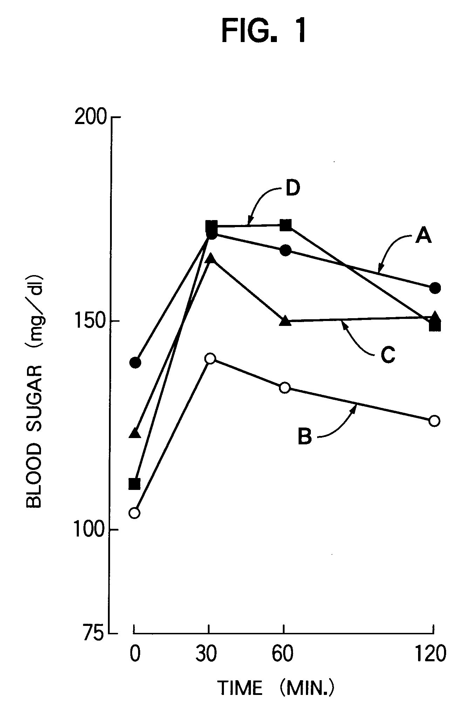

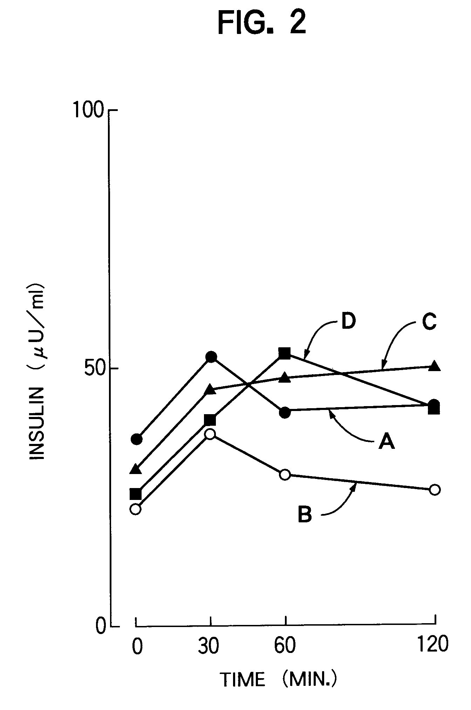

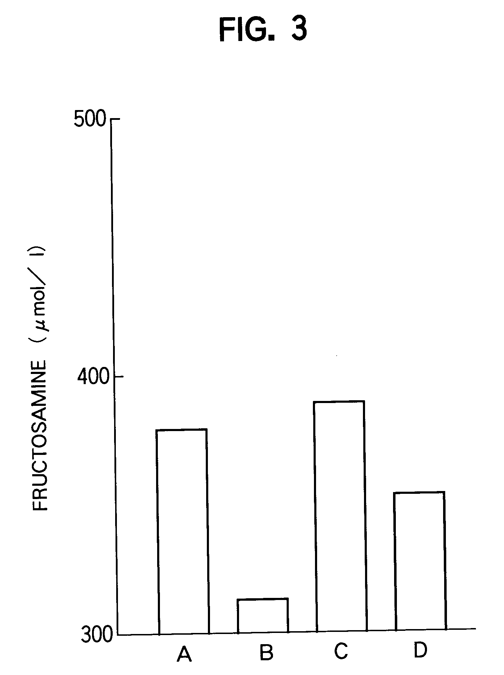

Rats (36 animals in all; averaged body weight 126 g; averaged fat content 20 g; averaged body/fat ratio (amount of fats/body weight × 100) 15.8%) were divided into 4 groups. The rats of Group A were supplied with a feed having a high sugar content (65% by weight) and the rats of each Group B to D were supplied with a synthetic feed which comprised 95 parts by weight of the feed having a high sugar content and 5 parts by weight of the indigestible dextrin of Experiment 1, pectin (isolated from lemons, available from Wako Pure Chemical Industries, Ltd.) or Cornfiber (available from Nihon Shokuhin Kako Co., Ltd.) for 4 weeks to breed the animals. These animals could freely take the feed and drinking water (tap water) during the breeding. The ratio of the indigestible components to sugar in the feed comprising the feed having a high sugar content and the indigestible dextrin was about 100:7 as in Experiment 3. After 4 weeks, these animals were used in a test wherein glucose (1.5 g/Kg body weight) was administered through oral route while restricting the feed and water intake. The blood was collected from each animal, during fasting or starvation, 30, 60 and 120 minutes after the administration of glucose to determine the blood-sugar level and the secreted insulin concentration. In respect of the samples collected during fasting or starvation, the fructosamine content of the plasma sample collected during fasting was determined. It has been known that the fructosamine content of the plasma is closely correlated with the averaged blood-sugar level as determined 2 weeks before the blood collection and is thus an effective means for evaluating the degree of impaired glucose tolerance in addition to the glucose administration test. The results thus obtained for blood-sugar level, insulin concentration and fructosamine content in the plasma are plotted on the attached Figs. 1 to 3 respectively.

In these figures, the following symbols are used:

A ● - ● : Rats of Group A to which a feed having a high sugar content was administered.

B ○ - ○ : Rats of Group B to which a synthetic feed comprising the feed having a high sugar content and the indigestible dextrin of the present invention was administered.

C ▲ - ▲ : Rats of Group C to which a synthetic feed comprising the foregoing feed having a high sugar content and pectin was administered.

D ■ - ■ : Rats of Group D to which a synthetic feed comprising the feed having a high sugar content and Cornfiber was administered.

As seen from the results shown in these figures, the rats of Group A to which the feed having a high sugar content was administered had, during fasting or starvation, a high blood-sugar level on the order of 140 mg/dl on the average; the blood-sugar level reached, 30 minutes after the administration, its maximum (170 mg/dl on the average) and thereafter was as a whole maintained at a high level which was on the order of about 1.2 times that observed during fasting or starvation even 120 minutes after the administration. In case of the rats of Group B to which the synthetic feed comprising the feed having a high sugar content and the indigestible dextrin of the present invention was administered, on the contrary, the blood-sugar level during fasting was equal to the normal level, the blood-sugar curve observed for Group B was distinctly held at a low level and the fructosamine content in the plasma was also low. On the other hand, the degree of abnormality of glucose tolerance due to high sugar intake was not relaxed at all through the administration of pectin or Cornfiber (in case of the rats of Groups C and D). Insulin concentration was the lowest in the rats of Group B of the present invention.

Experiment 5

Each group comprising SD male rats of 8-week-old (10 animals per group) was fasted overnight and then the following feed A, B or C was administered to these rats through oral route at intervals of one week: feed A comprising a 30% by weight aqueous solution of sugar (a dose of 1.5 g/Kg body weight); feed B comprising a 30% by weight aqueous solution of sugar (a dose of 1.5 g/Kg body weight) to which PINEFIBER C was added in an amount of 0.15 g/Kg body weight (0.13 g/Kg body weight as expressed in terms of the amount of the indigestible components); and feed C comprising a 30% by weight aqueous solution of sugar (a dose of 1.5 g/Kg body weight) to which PINEFIBER L (the trade name of a liquid indigestible dextrin preparation having a concentration of 65.5% by weight and a content of the indigestible components of 34.5% by weight, prepared from potato starch by the foregoing method (2) and available from Matsutani Chemical Industries, Ltd.) (a dose of 0.247 g/Kg body weight (0.13 g/Kg body weight as expressed in terms of the amount of the indigestible components)). Then the blood-sugar level and the amount of secreted insulin were determined over 2 hours. The results thus obtained are expressed in terms of average value ± standard deviation and are summarized in the following Table 3 in which the symbol "*" means that there was observed a significant difference in a risk rate of 5% as compared with Group A to which sugar was administered alone.

### Table 3

| Blood-Sugar Level (mg/dl) | Initial Level | After 30 min | After 60 min | After 120 min |
|---|---|---|---|---|
| A (Sugar alone) | 76.8± 3.5 | 164.7± 2.1 | 126.3± 4.0 | 112.4± 3.7 |
| B (Sugar + PFC) | 81.8± 2.4 | 138.3± 4.3* | 113.5± 3.8 | 109.2± 3.3 |
| C (Sugar + PFL) | 76.1± 3.9 | 138.9± 6.2* | 106.2± 3.7 | 107.1± 2.8 |

| Insulin Secretion ($\mu$ U/ml) | Initial Level | After 30 min | After 60 min | After 120 min |
|---|---|---|---|---|
| A (Sugar alone) | 12.4± 3.4 | 45.0± 3.2 | 15.8± 3.5 | 9.2± 2.3 |
| B (Sugar + PFC) | 9.9± 1.9 | 28.5± 3.0* | 9.8± 1.3 | 8.4± 1.2 |
| C (Sugar + PFL) | 8.5± 1.0 | 29.3± 3.7* | 15.7± 2.9 | 8.2± 1.0 |

PFC: PINEFIBER C

PFL: PINEFIBER L

As seen from Table 3, when PINEFIBER C or L was added, the blood-sugar level and the amount of secreted insulin as determined 30 minutes after the administration were significantly reduced as compared with those observed when sugar was administered alone and the effects of PINEFIBER C and L were almost identical to one another. More specifically, it becomes clear that PINEFIBER C and L show the same effect if the content of the effective component, i.e., the indigestible components in the former is equal to that for the latter.

Experiment 6

The following experiment was carried out using PINEFIBER L used in Experiment 5. Six dogs were fed with a commercially available dog food to which PINEFIBER L was added in an amount of 0.5 g/Kg body weight as expressed in terms of the indigestible components. The rate of PINEFIBER L incorporated into the dog food corresponded to 20 to 10 parts by weight (in terms of the indigestible components) per 100 parts by weight of the carbohydrate present in the dog food. The amount of the dog food administered and the quantity of exercise were managed in such a manner that the living environment and habits prior to the test were not altered at all during the test period as well. After the dog food was continuously administered over about 2 months, the effect of the indigestible dextrin was evaluated on the basis of the degree of obesity (Obesity Deg.) and body weight (Body Wt.). In this respect, the degree of obesity was estimated by examining the back of the dogs through touch, while the standard degree of obesity was assumed to be 100. The results thus obtained are summarized in the following Table 4.

Table 4

| | | Prior to Administration | | After Administration | |
|---|---|---|---|---|---|
| Subject | Age | Obesity Deg. | Body Wt. | Obesity Deg. | Body Wt. |
| a | 8 | 180 | 19.7 | 135 | 16.5 |
| b | 12 | 170 | 16.6 | 155 | 15.5 |
| c | 10 | 120 | 8.5 | 110 | 8.3 |
| d | 5 | 100 | 14.7 | 100 | 14.9 |
| e | 1 | 100 | 12.0 | 100 | 12.0 |
| f | 8 months | 100 | 5.0 | 100 | 5.2 |

The results listed in Table 4 clearly prove that the indigestible dextrin shows obesity-improving effect since it can reduce both the body weight and the degree of obesity for obese dogs showing the degree of obesity of not less than 120. On the other hand, the indigestible dextrin does not cause any change in body weight of the dogs having normal body weight and can hold the appropriate body weight thereof.

Experiment 7

Fourteen cats were fed with a commercially available cat food to which PINEFIBER L was added in an amount of 0.5 g/Kg body weight as expressed in terms of the indigestible components. The rate of PINEFIBER L incorporated into the cat food corresponded to 20 to 10 parts by weight (in terms of the indigestible components) per 100 parts by weight of the carbohydrate present in the cat food. The amount of the cat food administered and the quantity of exercise were managed in such a manner that the living environment and habits prior to the test were not altered at all during the test period as well. After the cat food was continuously administered over about 2 months, the effect of the indigestible dextrin was evaluated on the basis of the degree of obesity (Obesity Deg.) and body weight (Body Wt.). In this respect, the degree of obesity was estimated by examining the back of the cats through touch, while the standard degree of obesity was assumed to be 100. The results thus obtained are summarized in the following Table 5.

Table 5

| | | Prior to Administration | | After Administration | |
|---|---|---|---|---|---|
| Subject | Age | Obesity Deg. | Body Wt. | Obesity Deg. | Body Wt. |
| g | 10 | 135 | 6.5 | 131 | 6.1 |
| h | 8 | 130 | 4.7 | 112 | 4.2 |
| i | 4 | 120 | 5.0 | 110 | 4.2 |
| j | 8 | 120 | 4.7 | 115 | 3.9 |
| k | 4 | 120 | 4.2 | 110 | 3.5 |
| l | 4 | 120 | 4.2 | 118 | 4.1 |
| m | 2 | 120 | 4.0 | 116 | 3.8 |
| n | 11 | 120 | 3.0 | 110 | 2.7 |
| o | 4 | 110 | 7.0 | 110 | 7.0 |
| p | 8 | 110 | 4.0 | 110 | 4.0 |
| q | 6 | 100 | 5.5 | 100 | 5.4 |
| r | 5 | 100 | 4.6 | 100 | 4.5 |
| s | 9 | 100 | 4.1 | 100 | 4.0 |
| t | 1 | 100 | 2.5 | 100 | 2.5 |

The results listed in Table 5 clearly prove that the indigestible dextrin shows obesity-improving effect since it can reduce both the body weight and the degree of obesity for obese cats showing the degree of obesity of not less than 120. On the other hand, the indigestible dextrin does not cause any change in body weight of the cats having normal or almost normal body weight whose degree of obesity ranges from 100 to 110 and can hold the appropriate body weight thereof.

Experiment 8

Water was added to and mixed with a blend of basic components for a dry type pet food having the composition (weight basis) shown in Table 6 in an amount of 30% by weight and then the resulting mixture was compressed, shaped and heated on an iron plate heated at a temperature of 160 °C to give samples (each having a weight of about 10 g) having a rice cracker-like shape and a diameter of about 5 cm.

Table 6

| | Invention | Control |
|---|---|---|
| Wheat Flour | 35 | 35 |
| Fish Meal | 27 | 27 |
| Vegetable Protein | 20 | 20 |
| Skim Milk | 3 | 3 |
| PINEFIBER C | 5 | -- |

The hardness of each sample was determined 5 times using a ring crush tester (leaf spring 50 Kg; compressed surface area 3.14 cm$^2$) to determine the averaged value thereof. The results thus obtained are listed in the following Table 7.

Table 7

|  | Invention | Control |
|---|---|---|
| Hardness | 18.7 | 16.6 |

The results listed in Table 7 indicate that the addition of the indigestible dextrin permits the preparation of a dry type pet food having improved binding capacity and high hardness and this in turn permits the shortening of the time required for kneading by an extruder during production of the pet food as well as the reduction of the amount of water and the reduction of the drying time.

Experiment 9

Water was added to a blend of basic components for a semi-moist type pet food having the composition (weight basis) shown in the following Table 8 in an amount of 30% by weight and then the resulting mixture was sterilized through heating at 85°C for 15 minutes to give a sample.

Table 8

|  | Invention | Control |
|---|---|---|
| Wheat Flour | 35 | 35 |
| Vegetable Protein | 20 | 20 |
| Sugar | 20 | 20 |
| Propylene glycol | 10 | 10 |
| PINEFIBER C | 5 | -- |

The resulting sample (50 g) was formed into a predetermined shape and then the gel strength thereof was determined three times with a rheometer (diameter of plunger 3 mm; used for elastic compression) to determine the averaged value thereof. The results thus obtained are summarized in the following Table 9.

Table 9

|  | Invention | Control |
|---|---|---|
| Gel Strength | 583 g | 710 g |

The results listed in Table 9 indicate that the addition of the indigestible dextrin permits the preparation of a semi-moist type pet food which has a low strength, but has softness and is not brittle because of its improved binding capacity.

The present invention will hereunder be described in more detail with reference to the following non-limitative working Examples.

Example 1

The ingredients listed in the following Table 10 except for beef tallow were sufficiently mixed together, then the amount of water (or moisture content) in the mixture was adjusted to 25% by weight, thereafter transferred to a twin-screw extruder for foods [Model TEX95FC-23AW-2V; screw diameter 95 mm; rotational directions of the screws = same; motor power = 132 KW; max. 300 rpm; screw length to diameter ratio = 23:1; provided with a cast-in aluminum heater; water-cooling system; equipped with 2 bents; available from The Japan Steel Works, Ltd.], followed by sufficient mixing at a high temperature (130 °C ) and a high pressure (20 kg/cm$^2$ ), extrusion of the mixture through fine pores of a die at a high speed and cutting the extruded mixture into pieces having a predetermined length (10 mm). Then the pieces were dried in an air-circulating dryer at 70°C for 5 hours, the dried pieces (96 parts by weight) were sprayed with 4 parts by weight of beef tallow through the use of an atomizer to thus give a dry type dog food having a moisture content of about 10% by weight.

The finished dog food exhibited hard feeling as compared with the conventional expanded type one. The dog food met dog's taste and the obesity-improving effect was observed when it was administered to obese dogs.

Table 10

| Component | Amount Incorporated (part by weight) | Carbohydrate (part by weight) |
|---|---|---|
| Corn | 27 | 19.1 |
| Wheat Flour | 24 | 17.8 |
| Soybean Cake | 15 | 4.4 |
| Meat Meal | 17 | -- |
| Fish Meal | 5 | -- |
| Wheat Germ | 3 | 2.1 |
| Brewer's Yeast | 3 | 0.9 |
| Vitamins, Minerals | 2 | -- |
| Beef Tallow | 4 | -- |
| PINEFIBER C | 5 | -- |
| Ratio of Carbohydrate:Indigestible Components | 100 : 10 | |

## Example 2

The ingredients listed in the following Table 11 except for beef tallow were sufficiently mixed together, then the amount of water (or moisture content) in the mixture was adjusted to 25% by weight, thereafter transferred to an extruder identical to that used in Example 1, followed by sufficient mixing at a high temperature (130°C) and a high pressure (20 kg/cm$^2$), extrusion of the mixture through fine pores of a die at a high speed and cutting the extruded mixture into pieces having a predetermined length (10 mm). Then the pieces were dried in an air-circulating dryer at 70°C for 5 hours, the dried pieces (96 parts by weight) were sprayed with 4 parts by weight of beef tallow through the use of an atomizer to thus give a dry type cat food having a moisture content of about 10% by weight.

Table 11

| Component | Amount Incorporated (part by weight) | Carbohydrate (part by weight) |
|---|---|---|
| Wheat Flour | 35 | 23.1 |
| Fish Meal | 27 | 0.2 |
| Soybean Cake | 20 | 5.9 |
| Wheat Germ | 6 | 4.2 |
| Brewer's Yeast | 3 | 0.9 |
| Skim Milk | 3 | 1.5 |
| Vitamins, Minerals | 2 | -- |
| Beef Tallow | 4 | -- |
| PINEFIBER C | 5 | -- |
| Ratio of Carbohydrate:Indigestible Components | 100 : 12 | |

The finished cat food exhibited hard feeling as compared with the conventional expanded type one. The cat food met cat's taste and the obesity-improving effect was observed when it was administered to obese cats.

Example 3

Ingredients listed in the following Table 12 were sufficiently kneaded in a mixer, then the resulting mixture was molded through the use of an extruder identical to that used in Example 1 and heated at a temperature ranging from 90 to 100°C for one hour. Thereafter, the shaped mixture was cut into pieces having a predetermined length (10 mm) and then the pieces were cold air-dried in a cold air-circulating dryer at 10 °C for 20 hours to thus give a jerky type dog food having a moisture content of about 28% by weight.

The dog food exhibited excellent binding capacity during molding and the finished product was very soft as compared with the conventional jerky type one. The dog food met dog's taste and the obesity-improving effect was observed when it was administered to obese dogs.

Table 12

| Component | Amount Incorporated (part by weight) | Carbohydrate (part by weight) |
|---|---|---|
| Lean of Meat | 66 | 0.1 |
| Vegetable Protein | 13 | 3.9 |
| Chemically Prepared Seasoning | 0.5 | -- |
| Synthetic Preservative | 0.3 | -- |
| Color Developing Agent | 0.2 | -- |
| Starch | 5 | 4.5 |
| Beef Tallow | 14 | -- |
| PINEFIBER C | 5 | -- |
| Ratio of Carbohydrate : Indigestible Components | 100:51 | |

Example 4

The ingredients listed in the following Table 13 except for beef tallow were sufficiently mixed together, then water was added and sufficiently kneaded to adjust the amount of water (or moisture content) in the mixture to 30% by weight. Thereafter, the mixture was sterilized by heating at 85°C for 15 minutes, then cooled and transferred to an extruder identical to that used in Example 1, followed by extrusion through a molding die with cooling to give a molded product. Then the molded product (95 parts by weight) was coated with 5 parts by weight of beef tallow through spray coating technique to thus give a semi-moist type pet food.

The pet food exhibited excellent binding capacity during molding and the finished product was very soft as compared with the conventional type one. The pet food met pet's taste and the obesity-improving effect was observed when it was administered to obese pets.

Table 13

| Component | Amount Incorporated (part by weight) | Carbohydrate (part by weight) |
|---|---|---|
| Corn | 20 | 14.1 |
| Soybean Cake | 15 | 4.4 |
| Meat Meal | 20 | -- |
| Brewer's Yeast | 5 | 1.5 |
| Wheat Germ | 3 | 2.1 |
| Sugar | 20 | 19.8 |
| Propylene Glycol | 10 | -- |
| Vitamins, Minerals | 1.8 | -- |
| Potassium Sorbate | 0.2 | -- |
| Beef Tallow | 5 | -- |
| PINEFIBER C | 5 | -- |
| Ratio of Carbohydrate:Indigestible Components | 100 : 10 | |

The pet food according to the present invention can control the blood-sugar level and the amount of insulin secreted in response to the oral ingestion of sugary substances without any reduction in taste to thus prevent and treat obesity of pets and deficiency in the glucose tolerancy.

**Claims**

1. A pet food having an obesity-preventive effect comprising 5 to 100 parts by weight of an indigestible dextrin containing at least 30% by weight of indigestible components, per 100 parts by weight of carbohydrate present in the pet food.

2. The pet food of claim 1 wherein the amount of the indigestible dextrin ranges from 5 to 90 parts by weight per 100 parts by weight of the carbohydrate present in the pet food.

3. The pet food of claim 2 wherein the amount of the indigestible dextrin ranges from 10 to 40 parts by weight per 100 parts by weight of the carbohydrate present in the pet food.

4. The pet food of claim 1 wherein the content of the indigestible components present in the indigestible dextrin is at least 40% by weight.

5. The pet food of claim 4 wherein the content of the indigestible components present in the indigestible dextrin is at least 50% by weight.

6. The pet food of claim 1 wherein the content of the indigestible components present in the indigestible dextrin is at least 40% by weight and the amount of the indigestible dextrin ranges from 10 to 40 parts by weight per 100 parts by weight of the carbohydrate present in the pet food.

7. The pet food of claim 1 wherein the indigestible dextrin is prepared by either of the following methods:
   (1) a small amount of an inorganic acid is added to starch in the powdery state, the mixture is heated to give pyrodextrin, then the dextrin is hydrolyzed with $\alpha$-amylase and optionally refined;
   (2) the product prepared by the process (1) is further hydrolyzed with glucoamylase and optionally refined;

(3) the product prepared by the process (2) is further subjected to ion exchange chromatography to separate and remove the glucose fraction from the product.

8. The pet food of claim 1 wherein it is selected from the group consisting of dry type, semi-moist type, canned type and sausage type pet foods.

# FIG. 1

# FIG. 2

# FIG. 3

**European Patent Office**

# EUROPEAN SEARCH REPORT

Application Number

EP 94 30 6031

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,Y | EP-A-0 535 627 (MATSUTANI CHEMICAL INDUSTRIES CO. LTD.) * page 1, lines 10-56, examples 54-58 * | 1-8 | A23L1/18 A23K1/18 A23K1/16 |
| X | EP-A-0 540 421 (MATSUTANI CHEMICAL INDUSTRIES CO. LTD.) * page 4, lines 3-49, examples 54-58 * | 1-8 | |
| X | EP-A-0 538 146 (MATSUTANI CHEMICAL INDUSTRIES CO. LTD.) * examples 57-61 * | 1-8 | |
| X | EP-A-0 530 111 (MATSUTANI CHEMICAL INDUSTRIES CO. LTD.) * examples 57-61 * | 1-8 | |
| X,Y | EP-A-0 470 895 (MATSUTANI CHEMICAL INDUSTRIES CO. LTD.) * page 2, line 35-page 3, line 50 * | 1-8 | |
| Y | CHEMICAL ABSTRACTS, vol. 118, no. 19, 10 May 1993, Columbus, Ohio, US; abstract no. 190591u, * abstract * & TONYOBYO, vol.35, no.11, 1992, TOKYO pages 873 - 880 WAKABAYASHI ET AL. 'Effects of indigestible dextrin on sugar tolerance. II. Effect of continuous administration in rats fed on a high sucrose diet.' | 1-8 | TECHNICAL FIELDS SEARCHED (Int.Cl.6) A23K A23L |

-/--

The present search report has been drawn up for all claims

| Place of search | Date of completion of the search | Examiner |
|---|---|---|
| MUNICH | 22 December 1994 | Bendl, E |

EPO FORM 1503 03.82 (P04C01)

**European Patent Office**

## EUROPEAN SEARCH REPORT

Application Number

EP 94 30 6031

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | CHEMICAL ABSTRACTS, vol. 116, no. 2, 13 January 1992, Columbus, Ohio, US; abstract no. 15044h, * abstract * & IGAKU NO AYUMI, vol.159, no.12, 1991, JAPAN pages 945 - 946 WAKABAYASHI ET AL. 'Effect of indigestible dextrin on glucose tolerance in Sprague-Dawley rats fed on a high sucrose diet.' ----- | 1-8 | |
| | | | TECHNICAL FIELDS SEARCHED (Int.Cl.6) |

The present search report has been drawn up for all claims

| Place of search | Date of completion of the search | Examiner |
|---|---|---|
| MUNICH | 22 December 1994 | Bendl, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)